# EUROPEAN PATENT APPLICATION

(11) **EP 3 492 713 A2**
(43) Date of publication of application: **05.06.2019**
(21) Application number: 18192644.5
(22) Date of filing: 05.09.2018
(51) Int. Cl.: F01K 23/06

(54) **THERMAL ENERGY RECOVERY SYSTEM**

(30) Priority: 22.11.2017 JP 2017224994
(71) Applicant: Kabushiki Kaisha Kobe Seiko Sho (Kobe Steel, Ltd.), Kobe-shi, Hyogo, 651-8585 (JP)
(72) Inventor: NISHIMURA, Kazumasa, Takasago-shi,, Hyogo 676-8670 (JP); ADACHI, Shigeto, Takasago-shi,, Hyogo 676-8670 (JP); NARUKAWA, Yutaka, Takasago-shi,, Hyogo 676-8670 (JP)
(74) Representative: TBK

(57) **Abstract**

The present invention provides a thermal energy recovery system that is capable of suppressing a flow of a gas phase intermediate medium into an intermediate medium pump. A thermal energy recovery system includes an evaporator; an expander; a power recovery machine; a condenser; a working medium pump; heaters to evaporate the intermediate medium; an intermediate medium circulation flow passage; an intermediate medium pump; a by-pass flow passage to bypass the evaporator that is connected to the intermediate medium circulation flow passage; a cooling unit provided in the by-pass flow passage to condense the intermediate medium; and a valve provided in a portion on the upstream side of the cooling unit in the by-pass flow passage, the valve being a primary pressure adjustment valve to maintain the pressure value in a portion on the upstream side of the valve at a set value.

## Description

### BACKGROUND OF THE INVENTION

### (FIELD OF THE INVENTION)

The present invention relates to thermal energy recovery systems.

### (DESCRIPTION OF THE RELATED ART)

Thermal energy recovery systems to recover power from exhaust heat out of factories and engines through intermediate media and working media are conventionally known. For instance, JP 2016-180322 A discloses a heat recovery-type electric power generation system provided with a flow circuit on the heat source side to recover heat of an exhaust gas exhausted from an engine with water (an intermediate medium) and a working medium circuit (thermal energy recovery unit) to recover heat with a working medium from the flow circuit on the heat source side.

The flow circuit on the heat source side possesses a water circulation flow passage to circulate water. The water circulation flow passage is provided with an economizer that evaporates water by heating water with exhaust gas exhausted from an engine, a reservoir for water storage, and a pump (an intermediate medium pump) to transfer water to the economizer.

The working medium circuit possesses an evaporator to evaporate the working medium, an expander to expand the working medium that has flowed out from the evaporator, an electric generator connected to the expander, a condenser to condense the working medium that has flowed out from the expander, and a circulation pump to transfer the working medium that has flowed out from the condenser to the evaporator. The evaporator is provided in a portion between the economizer and the reservoir in the water circulation flow passage. In other words, the heat of water vapor that has flowed out from the economizer is transferred to the working medium in the evaporator. Note that the water vapor that has flowed into the evaporator condenses in the evaporator by exchanging heat with the working medium.

In such a thermal energy recovery system as described in JP 2016-180322 A, there is concern over an issue that water vapor (an intermediate medium) flows into the intermediate medium pump when the working medium circuit (a thermal energy recovery unit) stops, or water vapor fails to entirely condense in the evaporator.

An object of the present invention is to provide a thermal energy recovery system that is capable of preventing a flow of a gas phase intermediate medium into an intermediate medium pump.

### SUMMARY OF THE INVENTION

To achieve the object described above, according to a first aspect of the present invention, there is provided a thermal energy recovery system, including: an evaporator to evaporate a working medium with a gas phase intermediate medium by heating the working medium having a lower boiling point than the boiling point of the intermediate medium; an expander to expand the working medium having flowed out from the evaporator; a power recovery machine connected to the expander; a condenser to condense the working medium having flowed out from the expander; a working medium pump to transfer the working medium having flowed out from the condenser to the evaporator; a heater to evaporate the intermediate medium; an intermediate medium circulation flow passage connecting the heater and the evaporator in this order; an intermediate medium pump provided in a portion on the downstream side of the evaporator and on the upstream side of the heater in the intermediate medium circulation flow passage; a by-pass flow passage connected to the intermediate medium circulation flow passage to bypass the evaporator; a cooling unit provided in the by-pass flow passage to condense the intermediate medium; and a valve provided in a portion on the upstream side of the cooling unit in the by-pass flow passage, the valve being a primary pressure adjustment valve to maintain the pressure value in a portion on the upstream side of the valve at a set value.

In the thermal energy recovery system, the pressure of the gas phase intermediate medium that flows into the evaporator through the intermediate medium circulation flow passage is maintained at a set value (a value at which the pressure of the intermediate medium that flows out from the evaporator is equal to or less than the saturation pressure corresponding to the temperature of the intermediate medium that has flowed out from the evaporator) by the primary pressure adjustment valve. Therefore, an outflow of the gas phase intermediate medium from the evaporator is suppressed. Further, the gas phase intermediate medium that has passed through the primary pressure adjustment valve condenses by cooling in the cooling unit. Therefore, a flow of the gas phase intermediate medium into the pump is suppressed.

According to a second aspect of the present invention, there is provided a thermal energy recovery system, including: an evaporator to evaporate a working medium with a gas phase intermediate medium by heating the working medium having a lower boiling point than the boiling point of the intermediate medium; an expander to expand the working medium having flowed out from the evaporator; a power recovery machine connected to the expander; a condenser to condense the working medium having flowed out from the expander; a working medium pump to transfer the working medium having flowed out from the condenser to the evaporator; a heater to evaporate the intermediate medium; an intermediate medium circulation flow passage connecting the heater and the evaporator in this order; an intermediate medium pump provided in a portion on the downstream side of the evaporator and on the upstream side of the heater in the intermediate medium circulation flow passage; a by-pass flow passage connected to the intermediate medium circulation flow passage to bypass the evaporator; a cooling unit provided in the by-pass flow passage to condense the intermediate medium; and an adjustment unit to adjust both a flow amount of the intermediate medium into the evaporator and a flow amount of the intermediate medium into the cooling unit out of the intermediate medium having flowed out from the heater. The adjustment unit adjusts the flow amount of the intermediate medium into the evaporator so that the pressure value of the intermediate medium flowing into the evaporator becomes a set value.

In the thermal energy recovery system, the pressure of the gas phase intermediate medium that flows into the evaporator through the intermediate medium circulation flow passage is maintained at a set value. Therefore, a flow of the gas phase intermediate medium into the pump is suppressed.

According to a third aspect of the present invention, there is provided a thermal energy recovery system, including: an evaporator to evaporate a working medium with a gas phase intermediate medium by heating the working medium having a lower boiling point than the boiling point of the intermediate medium; an expander to expand the working medium having flowed out from the evaporator; a power recovery machine connected to the expander; a condenser to condense the working medium having flowed out from the expander; a working medium pump to transfer the working medium having flowed out from the condenser to the evaporator; a heater to evaporate the intermediate medium; an intermediate medium circulation flow passage connecting the heater and the evaporator in this order; an intermediate medium pump provided in a portion on the downstream side of the evaporator and on the upstream side of the heater in the intermediate medium circulation flow passage; a cooling unit provided in a portion on the downstream side of the evaporator and on the upstream side of the intermediate medium pump in the intermediate medium circulation flow passage to condense the intermediate medium having flowed out from the evaporator; and a valve provided in a portion between the evaporator and the intermediate medium pump in the intermediate medium circulation flow passage, the valve being a primary pressure adjustment valve to maintain the pressure in a portion on the upstream side of the valve at a set value.

In the thermal energy recovery system, the gas phase intermediate medium having flowed into the evaporator mostly condenses in the evaporator, and the intermediate medium having flowed out from the evaporator is cooled in the cooling unit, because the pressure of the gas phase intermediate medium flowing into the evaporator through the primary pressure adjustment valve is maintained at a set value (a value that the pressure of the intermediate medium having flowed out from the evaporator is equal to or less than the saturation pressure corresponding to the temperature of the intermediate medium having flowed out from the evaporator). Therefore, a flow of the gas phase intermediate medium into the pump is suppressed.

According to a fourth aspect of the present invention, there is provided a thermal energy recovery system, including: an evaporator to evaporate a working medium with a gas phase intermediate medium by heating the working medium having a lower boiling point than the boiling point of the intermediate medium; an expander to expand the working medium having flowed out from the evaporator; a power recovery machine connected to the expander; a condenser to condense the working medium having flowed out from the expander; a working medium pump to transfer the working medium having flowed out from the condenser to the evaporator; a heater to evaporate the intermediate medium; an intermediate medium circulation flow passage connecting the heater and the evaporator in this order; an intermediate medium pump provided in a portion on the downstream side of the evaporator and on the upstream side of the heater in the intermediate medium circulation flow passage; a cooling unit provided in a portion on the downstream side of the evaporator and on the upstream side of the intermediate medium pump in the intermediate medium circulation flow passage to condense the intermediate medium having flowed out from the evaporator; a flow adjustment valve provided in a portion between the cooling unit and the intermediate medium pump in the intermediate medium circulation flow passage; and a control unit to control the opening of the flow adjustment valve so that the pressure value of the intermediate medium flowing into the evaporator becomes a set value.

In the thermal energy recovery system, the pressure of the gas phase intermediate medium flowing into the evaporator through the intermediate medium circulation flow passage is maintained at a set value as the control unit controls the opening of the flow adjustment valve. Therefore, a flow of the gas phase intermediate medium into the pump is suppressed.

As described above, the present invention provides a thermal energy recovery system that is able to suppress a flow of the gas phase intermediate medium into the intermediate medium pump.

### BRIEF DESCRIPTION OF THE DRAWINGS

FIG. 1 is a view schematically showing a configuration of a thermal energy recovery system according to a first embodiment of the present invention.
FIG. 2 is a view schematically showing a configuration of a modified example of the thermal energy recovery system shown in FIG. 1.
FIG. 3 is a view schematically showing another configuration of a modified example of the thermal energy recovery system shown in FIG. 1.
FIG. 4 is a view schematically showing a configuration of a thermal energy recovery system according to a second embodiment of the present invention.
FIG. 5 is a view schematically showing a configuration of a modified example of the thermal energy recovery system shown in FIG. 4.

### DESCRIPTION OF THE PREFERRED EMBODIMENTS

Hereinafter, modes for carrying out the present invention will be described in detail with reference to the drawings.

### (First embodiment)

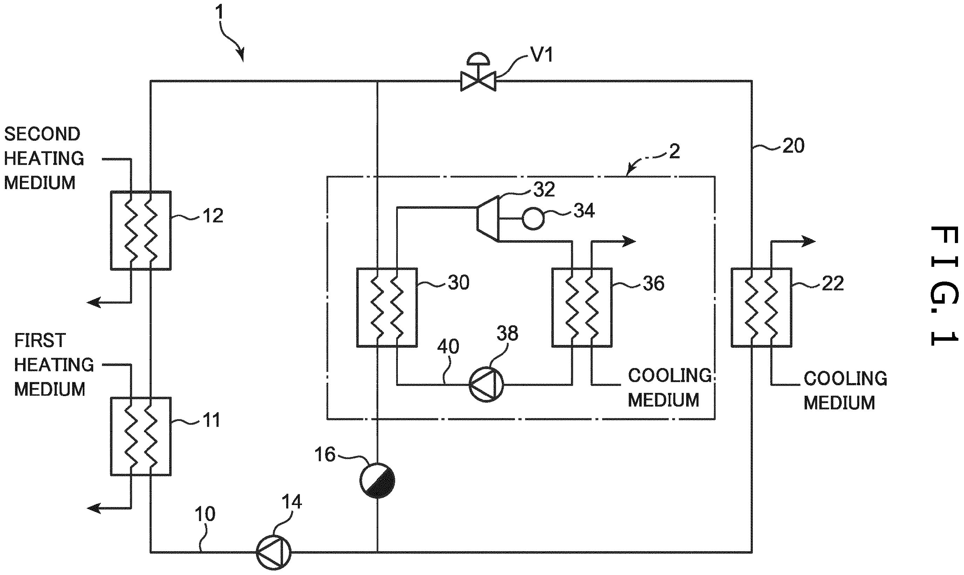

FIG. 1 shows a thermal energy recovery system according to a first embodiment of the present invention. The thermal energy recovery system is provided with an intermediate medium circuit 1 to recover heat such as an exhaust gas from an engine with an intermediate medium, and a thermal energy recovery unit 2 to recover heat from the intermediate medium circuit 1 with a working medium (a medium having a boiling point lower than the boiling point of the intermediate medium).

The intermediate medium circuit 1 recovers heat such as exhaust heat when an engine is driven with the intermediate medium (water in this embodiment). The intermediate medium circuit 1 possesses an intermediate medium circulation flow passage 10. The intermediate medium circulation flow passage 10 is provided with a first heater 11, a second heater 12, and an intermediate medium pump 14.

The first heater 11 heats the intermediate medium with a first heating medium (such as supercharged air supplied from supercharger to the engine).

The second heater 12 is provided in a portion on the downstream side of the first heater 11 in the intermediate medium circulation flow passage 10. The second heater 12 further heats the intermediate medium that has flowed out from the first heater 11 with a second heating medium (such as exhaust gas from the engine). The intermediate medium flows out from the second heater 12 in a saturated state or a slightly overheated state.

The intermediate medium pump 14 is provided in a portion on the downstream side of the second heater 12 and on the upstream side of the first heater 11 in the intermediate medium circulation flow passage 10. The intermediate medium pump 14 transfers the liquid phase intermediate medium to the first heater 11.

The thermal energy recovery unit 2 recovers heat from the intermediate medium circuit 1 with a working medium. The thermal energy recovery unit 2 is provided with an evaporator 30, an expander 32, a power recovery machine 34, a condenser 36, a working medium pump 38, and a working medium circulation flow passage 40 that connects the evaporator 30, the expander 32, the condenser 36, and the working medium pump 38 in this order.

The evaporator 30 is provided in a portion between the second heater 12 and the intermediate medium pump 14 in the intermediate medium circulation flow passage 10. Namely, the evaporator 30 evaporates the working medium by heat exchange between the working medium and the gas phase intermediate medium (water in this embodiment). On the other hand, the intermediate medium condenses in the evaporator 30. In this embodiment, a steam trap 16 is provided in a portion between the evaporator 30 and the intermediate medium pump 14 in the intermediate medium circulation flow passage 10. The steam trap 16 prohibits a passage of the gas phase intermediate medium while allowing a passage of the liquid phase intermediate medium.

The expander 32 is provided in a portion on the downstream side of the evaporator 30 in the working medium circulation flow passage 40. The expander 32 expands the gas phase working medium that has flowed out from the evaporator 30. In this embodiment, a positive displacement screw expander having rotors rotationally driven by expansion energy of the gas phase working medium is used as the expander 32.

The power recovery machine 34 is connected to the expander 32. The power recovery machine 34 recovers power from the working medium by rotation due to driving the expander 32. In this embodiment, an electric generator is used as the power recovery machine 34. Note that a compressor or other machines may be used as the power recovery machine 34.

The condenser 36 is provided in a portion on the downstream side of the expander 32 in the working medium circulation flow passage 40. The condenser 36 condenses the working medium by heat exchange between the working medium that has flowed out from the expander 32 and a cooling medium (such as cooling water).

The working medium pump 38 is provided in a portion on the downstream side of the condenser 36 (a portion between the condenser 36 and the evaporator 30) in the working medium circulation flow passage 40. The working medium pump 38 transfers the liquid phase working medium that has flowed out from the condenser 36 to the evaporator 30.

The intermediate medium circuit 1 according to the present embodiment further possesses a by-pass flow passage 20 to bypass the evaporator 30, a cooling unit 22 provided in the by-pass flow passage 20, and a primary pressure adjustment valve V1.

The upstream side of the by-pass flow passage 20 is connected to a portion between the second heater 12 and the evaporator 30 in the intermediate medium circulation flow passage 10. A portion of the downstream side of the by-pass flow passage 20 is connected to a portion between the steam trap 16 and the intermediate medium pump 14 in the intermediate medium circulation flow passage 10.

The cooling unit 22 condenses the intermediate medium with a cooling medium (such as cooling water) by cooling the gas phase intermediate medium flowing in the by-pass flow passage 20.

The primary pressure adjustment valve V1 is provided in a portion between the end on the upstream side of the by-pass flow passage 20 and the cooling unit 22 in the by-pass flow passage 20. The primary pressure adjustment valve V1 maintains the pressure value in a portion on the upstream side of the valve at a set value. Specifically, when an intermediate medium having a higher pressure value than the set value flows out from the second heater 12, the primary pressure adjustment valve V1 maintains the pressure in a portion on the upstream side of the valve at the set value by allowing part of the intermediate medium to pass through. Note that the gas phase intermediate medium that has passed through the primary pressure control valve V1 flows into the cooling unit 22. Therefore, the gas phase intermediate medium with a pressure of the set value flows into the evaporator 30. The set value is set to be a value (a value at which the gas phase intermediate medium that has flowed into the evaporator 30 mostly condenses in the evaporator 30) so that the pressure of the intermediate medium that flows out from the evaporator 30 is equal to or less than the saturation pressure corresponding to the temperature of the intermediate medium that has flowed out from the evaporator 30.

As described above, an outflow of the gas phase intermediate medium from the evaporator 30 is suppressed in the thermal energy recovery system, because the pressure of the gas phase intermediate medium that flows into the evaporator 30 through the intermediate medium circulation flow passage 10 is maintained at the set value by the primary pressure adjustment valve V1. Further, the gas phase intermediate medium that has passed through the primary pressure adjustment valve V1 condenses by cooling in the cooling unit 22. Therefore, the flow of the gas phase intermediate medium into the intermediate medium pump 14 is suppressed.

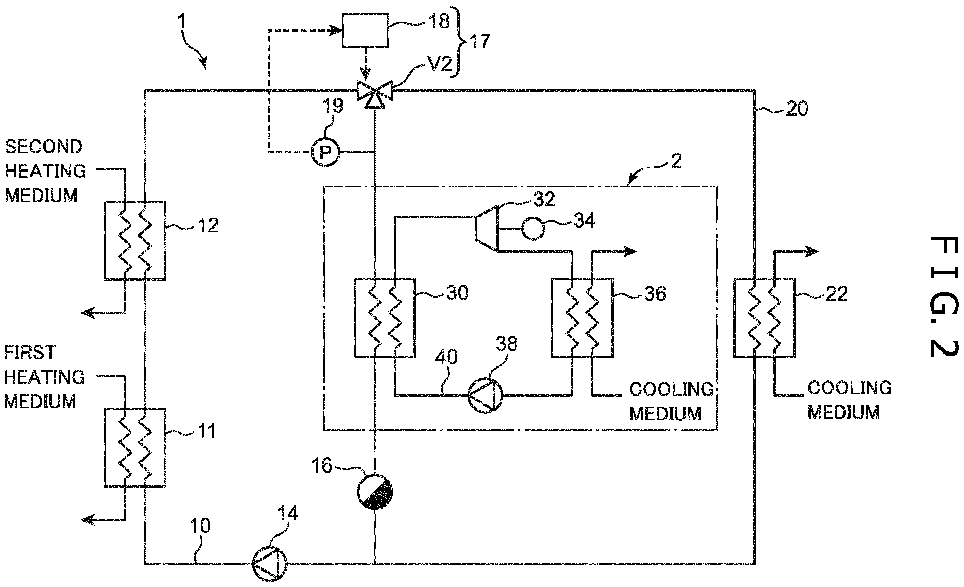

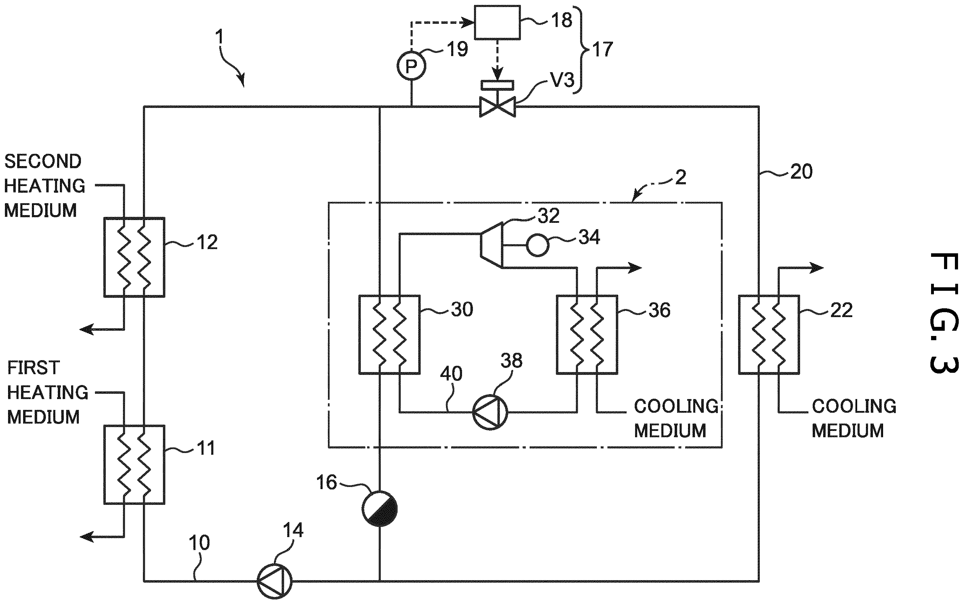

Note that in the thermal energy recovery system according to the present embodiment, an adjustment unit 17 may be provided instead of the primary pressure adjustment valve V1, as shown in FIGS. 2 and 3. The adjustment unit 17 adjusts the flow amount of the gas phase intermediate medium into the evaporator 30 and the flow amount of the gas phase intermediate medium into the cooling unit 22 out of the gas phase intermediate medium that has flowed out from the second heater 12.

In an example shown in FIG. 2, the adjustment unit 17 possesses a three-way valve V2 and a control unit 18. The three-way valve V2 is provided at a connection between the intermediate medium circulation flow passage 10 and the end on the upstream side of the by-pass flow passage 20. The control unit 18 controls the opening of the three-way valve V2 so that the pressure value of a gas phase intermediate medium that flows into the evaporator 30 becomes the set value. Note that the pressure of the gas phase intermediate medium that flows into the evaporator 30 is detected by a pressure sensor 19 provided in a portion between the three-way valve V2 and the evaporator 30 in the intermediate medium circulation flow passage 10. In this embodiment also, a flow of the gas phase intermediate medium into the intermediate medium pump 14 is suppressed, because the pressure of the gas phase intermediate medium that flows into the evaporator 30 through the intermediate medium circulation flow passage 10 is maintained at the set value.

In an example shown in FIG. 3, the adjustment unit 17 possesses a flow adjustment valve V3 that is provided in a portion on the upstream side of the cooling unit 22 in the by-pass flow passage 20, and the control unit 18. The control unit 18 controls the opening of the flow adjustment valve V3 so that a pressure value of a gas phase intermediate medium that flows into an evaporator 30 becomes the set value. Note that the pressure of the gas phase intermediate medium that flows into the evaporator 30 is detected by the pressure sensor 19 that is provided in a portion either on the upstream side of the flow adjustment valve V3 in the by-pass flow passage 20, or between a second heater 12 and the evaporator 30 in an intermediate media circulation flow passage 10. In this embodiment also, a flow of the gas phase intermediate medium into the intermediate medium pump 14 is suppressed.

### (Second embodiment)

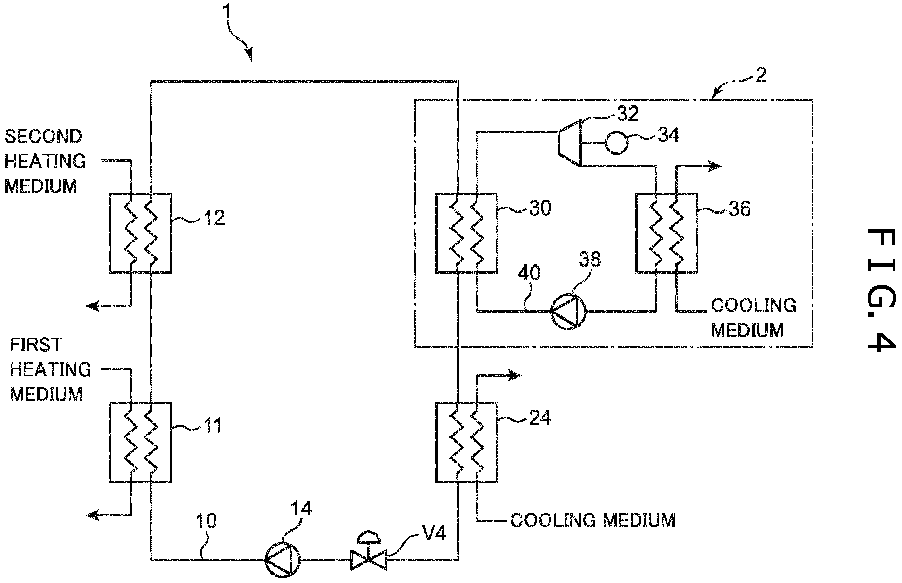

Hereinafter, a thermal energy recovery system according to a second embodiment of the present invention will be described with reference to FIG. 4. Note that in the second embodiment, only the differences from the first embodiment will be described, and the structures, the actions, and the effects same as in the first embodiment will be omitted.

In this embodiment, an intermediate medium circuit 1 possesses neither a by-pass flow passage nor a steam trap, but possesses a cooling unit 24 and a primary pressure adjustment valve V4 provided in a portion between an evaporator 30 and an intermediate medium pump 14 in an intermediate medium circulation flow passage 10.

The cooling unit 24 condenses an intermediate medium with a cooling medium (such as cooling water) by cooling the intermediate medium that has flowed out from the evaporator 30.

The primary pressure adjustment valve V4 is provided in a portion between the cooling unit 24 and the intermediate medium pump 14 in the intermediate medium circulation flow passage 10. The primary pressure adjustment valve V4 maintains the pressure in a portion on the upstream side of the valve at a set value (a value so that the pressure of the intermediate medium that flows out from the evaporator 30 is equal to or less than the saturation pressure corresponding to the temperature of the intermediate medium that has flowed out from the evaporator 30).

As described above, in the thermal energy recovery system according to the present embodiment, the gas phase intermediate medium that has flowed into the evaporator 30 mostly condenses in the evaporator 30, and the intermediate medium that has flowed out from the evaporator 30 is cooled in the cooling unit 24, because the pressure of the gas phase intermediate medium that flows into the evaporator 30 through the primary pressure adjustment valve V4 is maintained at the set value. Therefore, a flow of the gas phase intermediate medium into the intermediate medium pump 14 is suppressed.

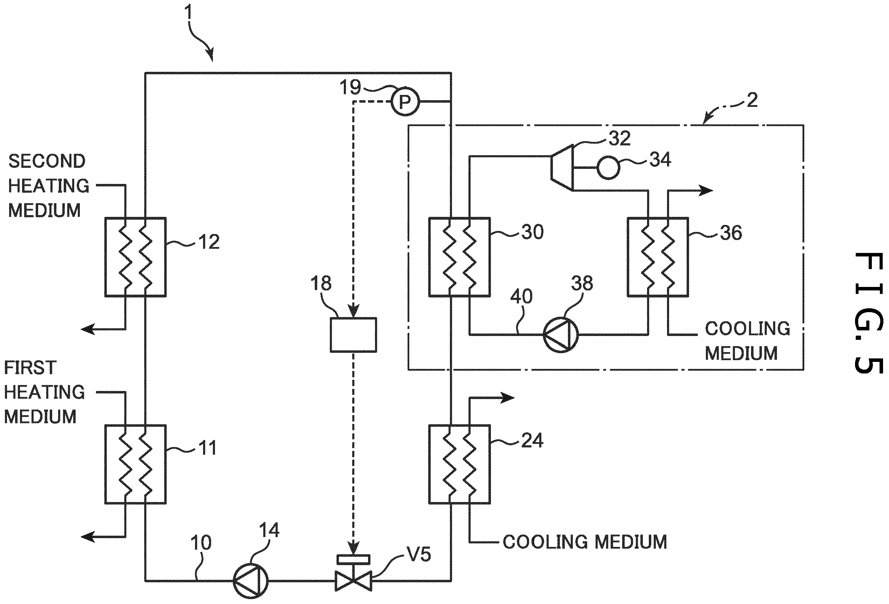

Note that in the thermal energy recovery system according to the present embodiment, a flow adjustment valve V5 and a control unit 18 may be provided, instead of the primary pressure adjustment valve V4, as shown in FIG. 5. The flow adjustment valve V5 is provided in the same portion as the primary pressure adjustment valve V4, namely, in a portion between the cooling unit 24 and the intermediate medium pump 14 in the intermediate medium circulation flow passage 10. The control unit 18 controls the opening of the flow adjustment valve V5 so that a pressure value of the intermediate medium that flows into the evaporator 30 becomes the set value. Note that the pressure of the intermediate medium that flows into the evaporator 30 is detected by a pressure sensor 19 that is provided in a portion either on the upstream side of the evaporator 30 and on the downstream side of a second heater 12 in the intermediate medium circulation flow passage 10, or in a portion on the upstream side of the flow adjustment valve V5 and on the downstream side of the evaporator 30 in the intermediate medium circulation flow passage 10.

In this embodiment, the pressure of the gas phase intermediate medium that flows into the evaporator 30 through the intermediate medium circulation flow passage 10 is maintained at the set value, because the opening of the flow adjustment valve V5 is controlled by the control unit 18. Therefore, the flow of the gas phase intermediate medium into the intermediate medium pump 14 is suppressed.

Note that the embodiments disclosed in the present invention should be considered to be exemplary in all respects and not restrictive at all. The scope of the present invention is presented in the scope of the patent claims and not in the explanation of the above embodiments, and further includes all modifications within the meanings and the scope equivalent to the scope of the patent claims.

For instance, any one of the first heater 11 and the second heater 12 may be omitted.

The present invention provides a thermal energy recovery system that is capable of suppressing a flow of a gas phase intermediate medium into an intermediate medium pump. A thermal energy recovery system includes an evaporator; an expander; a power recovery machine; a condenser; a working medium pump; heaters to evaporate the intermediate medium; an intermediate medium circulation flow passage; an intermediate medium pump; a by-pass flow passage to bypass the evaporator that is connected to the intermediate medium circulation flow passage; a cooling unit provided in the by-pass flow passage to condense the intermediate medium; and a valve provided in a portion on the upstream side of the cooling unit in the by-pass flow passage, the valve being a primary pressure adjustment valve to maintain the pressure value in a portion on the upstream side of the valve at a set value.

## Claims

1. A thermal energy recovery system, comprising:
an evaporator to evaporate a working medium with a gas phase intermediate medium by heating the working medium having a lower boiling point than the boiling point of the intermediate medium;
an expander to expand the working medium having flowed out from the evaporator;
a power recovery machine connected to the expander;
a condenser to condense the working medium having flowed out from the expander;
a working medium pump to transfer the working medium having flowed out from the condenser to the evaporator;
a heater to evaporate the intermediate medium;
an intermediate medium circulation flow passage connecting the heater and the evaporator in this order;
an intermediate medium pump provided in a portion on the downstream side of the evaporator and on the upstream side of the heater in the intermediate medium circulation flow passage;
a by-pass flow passage connected to the intermediate medium circulation flow passage to bypass the evaporator;
a cooling unit provided in the by-pass flow passage to condense the intermediate medium; and
a valve provided in a portion on the upstream side of the cooling unit in the by-pass flow passage, the valve being a primary pressure adjustment valve to maintain the pressure value in a portion on the upstream side of the valve at a set value.

2. The thermal energy recovery system, comprising:
an evaporator to evaporate a working medium with a gas phase intermediate medium by heating the working medium having a lower boiling point than the boiling point of the intermediate medium;
an expander to expand the working medium having flowed out from the evaporator;
a power recovery machine connected to the expander;
a condenser to condense the working medium having flowed out from the expander;
a working medium pump to transfer the working medium having flowed out from the condenser to the evaporator;
a heater to evaporate the intermediate medium;
an intermediate medium circulation flow passage connecting the heater and the evaporator in this order;
an intermediate medium pump provided in a portion on the downstream side of the evaporator and on the upstream side of the heater in the intermediate medium circulation flow passage;
a by-pass flow passage connected to the intermediate medium circulation flow passage to bypass the evaporator;
a cooling unit provided in the by-pass flow passage to condense the intermediate medium; and
an adjustment unit to adjust both a flow amount of the intermediate medium into the evaporator and a flow amount of the intermediate medium into the cooling unit out of the intermediate medium having flowed out from the heater, wherein
the adjustment unit adjusts the flow amount of the intermediate medium into the evaporator so that the pressure value of the intermediate medium flowing into the evaporator becomes a set value.

3. The thermal energy recovery system, comprising:
an evaporator to evaporate a working medium with a gas phase intermediate medium by heating the working medium having a lower boiling point than the boiling point of the intermediate medium;
an expander to expand the working medium having flowed out from the evaporator;
a power recovery machine connected to the expander;
a condenser to condense the working medium having flowed out from the expander;
a working medium pump to transfer the working medium having flowed out from the condenser to the evaporator;
a heater to evaporate the intermediate medium;
an intermediate medium circulation flow passage connecting the heater and the evaporator in this order;
an intermediate medium pump provided in a portion on the downstream side of the evaporator and on the upstream side of the heater in the intermediate medium circulation flow passage;
a cooling unit provided in a portion on the downstream side of the evaporator and on the upstream side of the intermediate medium pump in the intermediate medium circulation flow passage to condense the intermediate medium having flowed out from the evaporator; and
a valve provided in a portion between the evaporator and the intermediate medium pump in the intermediate medium circulation flow passage, the valve being a primary pressure adjustment valve to maintain the pressure in a portion on the upstream side of the valve at a set value.

4. The thermal energy recovery system, comprising:
an evaporator to evaporate a working medium with a gas phase intermediate medium by heating the working medium having a lower boiling point than the boiling point of the intermediate medium;
an expander to expand the working medium having flowed out from the evaporator;
a power recovery machine connected to the expander;
a condenser to condense the working medium having flowed out from the expander;
a working medium pump to transfer the working medium having flowed out from the condenser to the evaporator;
a heater to evaporate the intermediate medium;
an intermediate medium circulation flow passage connecting the heater and the evaporator in this order;
an intermediate medium pump provided in a portion on the downstream side of the evaporator and on the upstream side of the heater in the intermediate medium circulation flow passage;
a cooling unit provided in a portion on the downstream side of the evaporator and on the upstream side of the intermediate medium pump in the intermediate medium circulation flow passage to condense the intermediate medium having flowed out from the evaporator;
a flow adjustment valve provided in a portion between the cooling unit and the intermediate medium pump in the intermediate medium circulation flow passage; and
a control unit to control the opening of the flow adjustment valve so that the pressure value of the intermediate medium flowing into the evaporator becomes a set value.
